# EUROPEAN PATENT SPECIFICATION

(11) **EP 2 090 950 B1**
(45) Date of publication and mention of the grant of the patent: **13.05.2015**
(21) Application number: 08151548.8
(22) Date of filing: 18.02.2008
(51) Int. Cl.: H04L 12/24, H04L 12/437, H04L 12/753, H02J 13/00, G05B 19/418, G06F 11/20

(54) **Critical device with increased availability**
Kritische Vorrichtung mit erhöhter Verfügbarkeit
Dispositif critique doté d'une disponibilité étendue

(43) Date of publication of application: 19.08.2009
(73) Proprietor: ABB Research Ltd., 8050 Zürich (CH)
(72) Inventor: Kirrmann, Hubert, CH-5405, Dättwil (CH); Mueri, Peter, CH-5200, Brugg (CH); Hansson, Mats, SE-74143, Knivsta (SE)
(74) Representative: ABB Patent Attorneys

(56) References cited:
- WO-A-2007/000499
- WO-A-2007/083311
- US-A1- 2005 220 062

## Description

### FIELD OF THE INVENTION

The invention relates to the field of industrial communication systems with redundant communication networks, in particular to vehicle control, drive control or substation automation systems. It departs from a process critical device as described in the preamble of claim 1.

### BACKGROUND OF THE INVENTION

In industrial communication systems for vital or otherwise critical applications such as vehicle control, drive control or substation automation, availability or reliability is a key issue, because a failing communication system may ultimately lead to an interruption of the application and a shut down of an industrial process controlled by the latter. Therefore, communication network redundancy is an important feature of many industrial communication systems demanding high availability, in particular in case of Ethernet based communication with commercial switches.

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises microprocessor based, programmable secondary devices, so-called Intelligent Electronic Devices (IED) responsible for protection, control and monitoring of the primary devices. The IEDs are generally assigned to one of three hierarchical levels, i.e. the station level, the bay or feeder level, and the process level being separated from the bay level by a process interface. The station level of the SA system includes an Operator Work Station (OWS) with a Human-Machine Interface (HMI) and a gateway to a Network Control Centre (NCC). IEDs on the bay level, also termed bay units, in turn are connected to each other and to the IEDs on the station level via an inter-bay or station bus. The communication network connection points of the latter, i.e. the (ports of the) Ethernet switches to which the various application and station level IEDs are connected, have a relatively short Mean Time To Failure (MTTF). Hence, IEDs may be connected, via two distinct ports to two distinct and hence redundant communication networks as physical communication channels (managed according to Parallel Redundancy Protocol PRP), or to two distinct switches in a ring configuration (managed e.g. according to Rapid Spanning Tree Protocol RSTP, or to IEC 62439 Media Redundancy Protocol MRP).

A high level of redundancy may be provided by duplicating all communication links, e.g. the electrical or optical transmission links, as well as at least the physical layer of the corresponding protocol stack of the devices attached to the communication links through two independent transceivers and bus controllers. For seamless operation, a sender sends frames simultaneously over both links and the receiver accepts whichever frame of a pair of redundant frames comes first and ignores the later frame. This method is the subject of a IEC standardization known as Parallel Redundancy Protocol (PRP) (IEC 62439, Clause 6) and described in the patent application WO06053459. The PRP method offers a completely seamless switchover, since there is no need to repeat a frame in case of disruption of one path. It also offers a complete supervision of both redundant links with normal traffic, ensuring a high coverage.

However, this method requires a full and hence rather uneconomical duplication of the physical network. On the other hand, in many applications, it may be sufficient to provide a medium level of redundancy to selected critical devices on station level such as operator workplaces, connectivity servers and communication gateways by attaching them to two different switches of the same network.

Further prior art solutions are disclosed in documents WO 2007/000499, WO 2007/083311 and US 2005/220062.

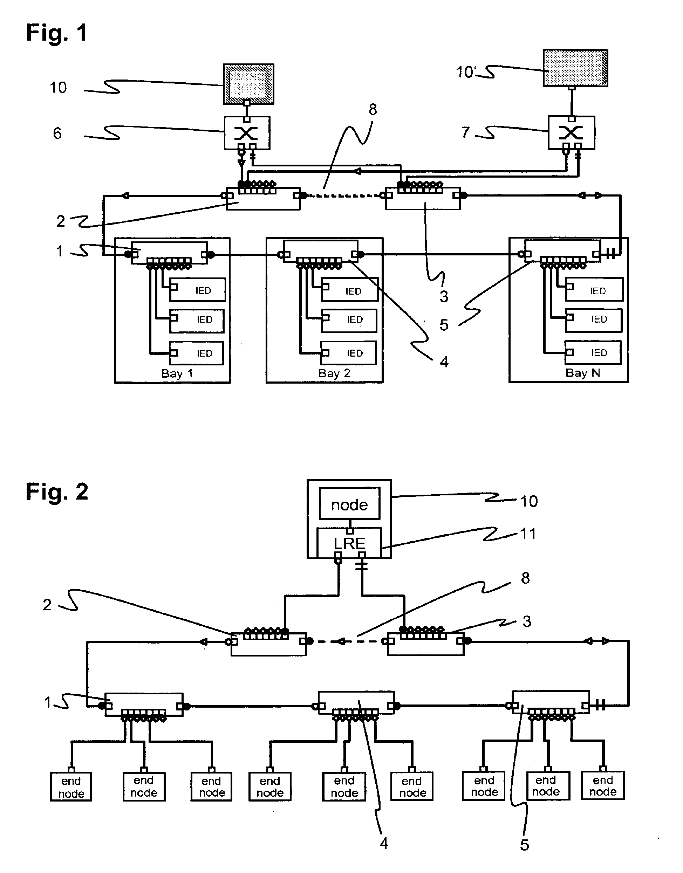

Fig.1 depicts a partially duplicated network operating in a ring topology, comprising a number of switches 1 to 5 as well as two switch elements 6, 7 connected to two critical devices 10. Such a topology requires that no logical loops appear in the network. This can be achieved if all switches and switch elements obey to the RSTP protocol (IEEE 802.1D). For better understanding, the IEEE 802.1D terminology and conventions with symbols for root port (white circle) pointing to a root bridge, designated port (black circle) relaying to a root bridge, alternate port (double slash) and edge ports (rhombus) have been followed in Fig.1. Ports in the alternate role are not active and merely receive occasional network management messages from the designated port at the other end of the link. In any case, the role of a port may change upon a change in network topology. In the example depicted in Fig.1, switch 1 is the root bridge. The inter-switch link 8 between switch 2 and 3 (dashed) is in principle not necessary, since both switch elements 6, 7 are capable of bridging the data traffic between switch 2 and 3 by changing the role of a port of one of the switch elements from alternate to designate.

In many projects, critical devices are *required* to be directly doubly attached, i.e. the use of a dedicated *external* switch that may give rise to a failure of the so-called leave link between the external switch and the critical device is not allowed. It is however acceptable to embed or include a switch element or switch fabric within the enclosure of the critical device, since both the critical device and the embedded switch are assumed to fail at the same time. The switch elements however require special hardware and generate additional costs.

### DESCRIPTION OF THE INVENTION

It is therefore an objective of the invention to increase the availability of a critical device connected to a communication network without additional failure prone hardware such as dedicated external switches or costly embedded switch elements. These objectives are achieved by a process-critical device and a method of operating a process-critical device according to the claims 1 and 6. Further preferred embodiments are evident from the dependent patent claims.

According to the invention, the critical device is equipped with two network controllers with two physical layer ports in view of a connection, as a doubly attached node (DAN), to two distinct or redundant switches of a ring-type communication network, thus creating a partially redundant network with an increased availability of the critical device. In the critical device, a Link Redundancy Entity (LRE) is provided as a software module for controlling the communication of the critical device with the two distinct switches. However, the LRE does generally not provide the capability to relay or forward, from one of the ports of the critical device to the other and at full network throughput, regular data frames, i.e. data packets that are not merely network management messages. The LRE only implements relaying functionality on behalf of the communication network in the irregular or exceptional case where the last or only communication path or link connecting the two distinct switches comprises the critical device.

Following the terminology of the Rapid Spanning Tree Protocol (RSTP), the critical device is not a full-fledged RSTP switch element in case there is a working communication connection between the two distinct switches of which the critical device is not part, with the LRE implementing only a precise subset of the RSTP without providing the capacity of relaying regular or non-management data frames from one of its ports to the other. In other words, the LRE constrains, at all times during regular operation where the communication network is a connected graph even without the critical device, a port role of either the first or the second port to "alternate". For instance, if the switch connected to a first port of the critical device fails, a network reconfiguration may be initiated with the first port changing its role from "root" to "alternate" while the second port changes its role from "alternate" to "root". A port does not take the "dedicated" role under normal circumstances. It has to be noted that any other protocol such as Media Redundancy Protocol MRP (IEC 62439) allowing a reconfiguration of the network on the link layer, i.e. on the second layer of the protocol stack according to the OSI model, can be adapted in a similar way as depicted hereunder for the RSTP.

In switched Ethernet networks the invention allows using two standard commercial Ethernet network controllers rather than special controllers with an embedded switch element or switch fabric. It provides a high availability connection to the redundant switches and at the same time reduces substantially the complexity of and computational load on the critical device. Since the proposed topology is simple, no filtering database in the sense of IEEE 802.1d or address tables are required.

In a preferred embodiment, the LRE of the critical device is also adapted to execute the Parallel Redundancy protocol (PRP) according to IEC 62439, thus enabling a fully redundant operation and interoperation of devices implementing the parallel redundancy protocol with devices that do not. The LRE, or the respective link layer of the protocol stack of the device, becomes slightly more complex, but its activity, and in particular the duplication, remains invisible to the application run by the processor of the device. According to the dependability requirements of the application, one of the two modes of redundant operation is chosen upon configuration of the control system by appropriately setting flags or bits. This reduces inventory costs and allows flexible configurations.

The present invention also relates to a computer program including computer program code means executable on a processor of a process-critical device in a communication network of a process control system and storable on a computer readable medium such as a memory integrated in the device or a data carrier that can be inserted into the device, and which computer program, when executed, makes the process-critical device operate in accordance with the invention.

### BRIEF DESCRIPTION OF THE DRAWINGS

The subject matter of the invention will be explained in more detail in the following text with reference to preferred exemplary embodiments which are illustrated in the attached drawings, of which:
Fig.1 shows a prior art communication network with two critical devices connected in a medium redundant manner;
Fig.2 shows a communication network with a critical device comprising a Link Redundancy Entity (LRE) and connected as a Doubly Attached Node (DAN);
Fig.3 shows essential components of a critical device;
Fig.4 is a flowchart illustrating a preferred method for operating a critical device;
Fig.5 shows an implementation of the critical device; and
Fig.6 shows a state machine of a single port of the critical device.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Fig.1 depicts a prior art network operating in a ring topology. The network comprises switches 1 to 5 and two switch elements 6, 7. Two critical devices 10, 10' are connected to switch elements 6 and 7 as Doubly Attached Nodes (DANs), creating a partially redundant network. Switches 1, 4 and 5 are associated with specific bays. Each of the switches 1, 4 and 5 is connected to IEDs assigned to the bay associated with the corresponding switch. For example, switch 1 is connected to IEDs assigned to bay 1. In addition, switches 2 and 3 are connected to the switch elements 6 and 7 and separated by an inter-switch link 8 (dashed line). Such a configuration is possible if all the switches 1 to 5 and the switch elements 6 and 7 function in accordance with a protocol ensuring that there are no logical loops in the network, such as the RSTP (IEEE 802.1D),

In Fig.1, the IEEE 802.1D conventions, with symbols for root port (white circle) pointing to a root bridge, designated port relaying to a root bridge (black circle), alternate port (double slash) not forwarding and edge ports (rhombus) not participating in the protocol, have been followed. Ports in the alternate role only send and receive network management frames to/from the designated port at the other end of the link. In any case, the role of a port may change upon a change in the network topology. In the example depicted in Fig.1, switch 1 is assumed to be the root bridge. Further, the inter-switch link 8 between the switches 2 and 3 (dashed) is, in principle, not necessary, since both switch elements are capable of bridging the data traffic between switch 2 and 3 by changing the role of a port of one of the switch elements from alternate to designate.

Fig.2 shows a Serial Redundancy Protocol (SRP) topology with a critical device 10 as a DAN including a Link Redundancy Entity (LRE) 11 and connected to two switches 2, 3 of a network. The network also comprises switches 1, 4 and 5, each of which is connected to a number of end nodes. The end nodes can be, for example, measurement, control and protection devices of the control system. An inter-switch link 8 between switch 2 and switch 3 has been established in parallel with the critical device 10, so as to avoid that a failure elsewhere in the ring, e.g. a link failure between switch 4 and 5, causes the critical device 10 to become the last existing path. Nevertheless, if critical device 10 becomes the only path remaining to keep the network as a connected graph, for instance if the inter-switch link 8 between the switches 2 and 3 and the link between switches 4 and 5 fail, i.e. in case of double fault, the critical device 10 would have to relay the data frames.

As long as a ring-type communication network is closed by providing a link or communication segment between the two redundant switches, the critical device does not relay frames during normal operation. However, in view of a failure of inter-switch link 8, the two ports of device 10 broadcast Bridge Protocol Data Unit (BPDU) messages according to Rapid Spanning Tree Protocol (RSTP) 802.1D during normal operation indicating that this is a path with exorbitantly high path costs. Hence, the two switches 2 and 3 will not attempt to thread the data frames through the critical device during regular operation and will prefer to use inter-switch link 8 instead. Nevertheless, if this path through the ports is the last one to keep the communication network as a connected graph, the critical device 10 has to relay the data frames between the two switches 2 and 3. As this extra service considerably impacts on the performance of the critical device, this situation is considered irregular and only temporarily acceptable.

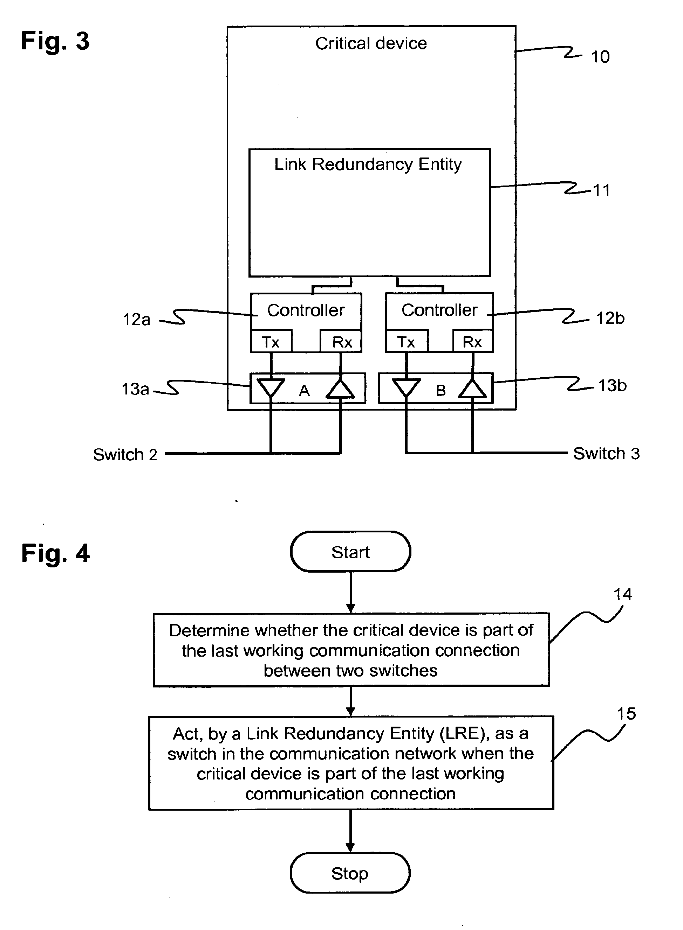

Fig.3 shows the critical device 10, in which the LRE 11 is connected to two network controllers 12a and 12b. Each of the network controllers 12a and 12b has a transmitter and a receiver, which are used to transmit and receive data frames respectively. The first network controller 12a is connected to a first port 13a and the second network controller 12b is connected to a second port 13b. The first port 13a in turn is connected to the switch 2 and the second port 13b is connected to the switch 3. In accordance with an embodiment of the invention, the critical device 10 behaves like an RSTP switch element, but its ports do not act as designated ports. In other words, the critical device 10 never relays data frames from one of its ports to the other, except in a situation when the critical device 10 is the last working communication connection between the two switches 2 and 3. When the critical device 10 is the last working communication connection between the two switches 2 and 3, the LRE 11 is adapted to act as a switch in the network. In this case, the critical device 10 can relay, albeit with reduced performance, data frames from one port 13a, 13b to the other port 13b, 13a.

Fig.4 is a flowchart illustrating a preferred method for operating the critical device 10 with increased availability in a communication network of a process control system. The critical device 10 includes the network controllers 12a and 12b which are connected to the first and second ports 13a and 13b, which in turn are connected to switches 2 and 3. At step 14, it is determined whether the critical device 10 is part of the last working communication connection between the two switches 2 and 3. At step 15, the LRE 11 of the critical device 10 acts as a switch in the communication network, when it is determined that the critical device 10 is the last working communication connection between the switches 2 and 3.

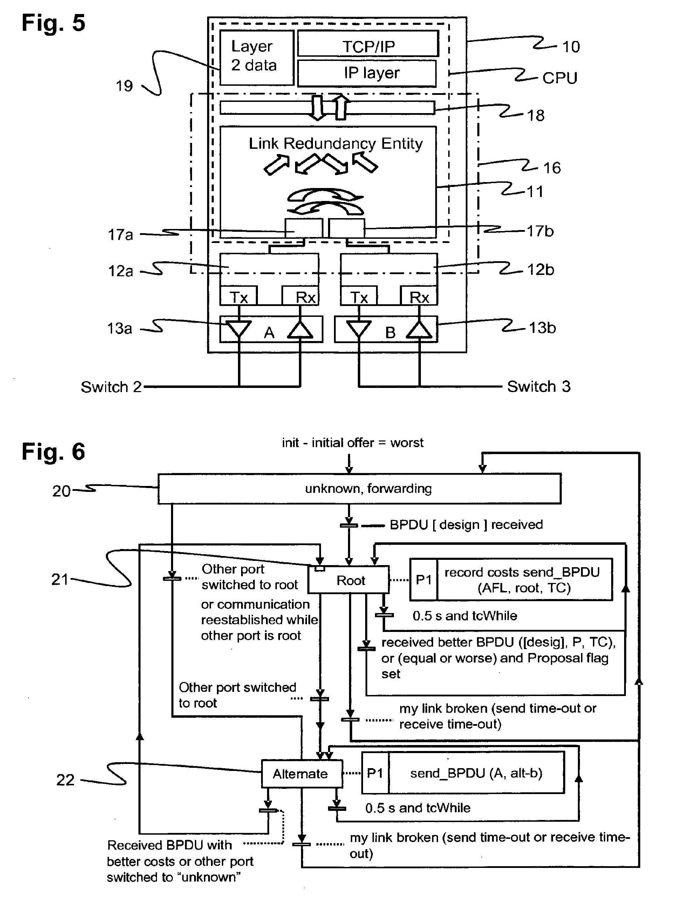

Fig.5 shows an implementation of a subset of RSTP at the critical device 10 in a communication network of a process control system. The critical device 10 can be an IED and the process control system can serve the purpose of a Substation Automation system. The critical device 10 includes the LRE 11, which is connected to the network controllers 12a and 12b. The two network controllers 12a and 12b can be Ethernet controllers. They, in turn, are connected to ports 13a and 13b, which are in turn connected to switches 2 and 3 respectively.

The LRE 11 is part of a link layer 16 of the protocol stack of the critical device 10. The link layer 16 comprises the LRE 11, two link layer drivers 17a and 17b, and a singular link-to-network layer or an upper link layer 18. The link layer drivers 17a and 17b are connected to the two network controllers 12a and 12b, they operate for instance according to IEEE Standard 802.3. The LRE 11 is hierarchically situated between the two link layer drivers 17a and 17b and the singular link-to-network layer 18. The singular link-to-network layer 18 serves as an interface between the LRE 11 and higher-level protocol layers 19. The higher-level protocol layers 19 comprise for instance the Transmission Control Protocol (TCP/UDP) layer, the Internet Protocol (IP) layer and the real-time data link layer (Layer 2) used for time-critical industrial communication.

When the critical device 10 is operating according to the Serial Redundancy Protocol (SRP) and there is a working communication connection between the switches 2 and 3, the LRE 11 implements a subset of the RSTP. In this case, the LRE 11 may define the first port 13a to be a root port and the second port 13b to be an alternate port. This substantially reduces the complexity of the critical device 10, and in particular it allows using two standard commercial Ethernet network interfaces, or Ethernet controllers, like network controllers 12a and 12b, rather than special controllers together with a switch fabric such as Marvell 88E6063.

When the critical device 10 is working in accordance with the Parallel Redundancy Protocol (PRP), the LRE 11 is adapted to send identical data frames to the two network controllers 12a and 12b, which are connected to two redundant communication links of the communication network. The LRE 11 duplicates the data frames sent by the higher-level protocol layers 19 and the network controllers 12a and 12b transmits these duplicated data frames to the network via the redundant communication links.

When a data frame is received by the critical device 10 while working according to the PRP, the LRE 11 determines whether the received data frame is a singular data frame transmitted over one communication link only, or whether the received data frame is a first frame of two redundant frames received over the two communication links of the redundant communication network. When it is determined that the received frame is a second frame of the two redundant frames or is not a singular frame, the LRE 11 rejects the received frame and no further processing of the frame is performed by the critical device 10. In accordance with one embodiment of the present invention, the LRE 11 determines whether the received frame is a singular frame or a first frame of the two redundant frames by calculating a redundancy identifier for the received frame and comparing this value with a redundancy identifier of earlier singular frame. If the calculated redundancy identifier for the received frame is same as the redundancy identifier for the earlier singular frame, then the received frame is the second frame of two redundant frames and the LRE 11 rejects that data frame.

Fig.6 shows a state machine for a preferred implementation of a subset of RSTP for the first port 13a of the critical device 10. It will be apparent to a person ordinarily skilled in the art that the preferred state machine implementation illustrated in Fig. 6 is also applicable on the second port 13b, symmetrically. The state machine comprises an unknown state 20, a root state 21 and an alternate state 22. The unknown state 20 is a default state of the port 13a and corresponds to a "forwarding" state, i.e. the first port 13a forwards data packets received from its upper layer to the network controller 12a. When port 12 a receives a BPDU indicating communication path cost to the root bridge, it records the communication costs indicated by the received BPDU and changes its state from the unknown state 20 to the root state 21. In this state, the first port 13a keeps on forwarding frames between the upper layers and the network controller. At the same time, the transition of first port 13a to root state has the effect that the state machine of second port 13b goes to the alternate state and second port 13b ceases to forward frames between upper layer and network controller 12b. At the time, first port 13a offers the lowest cost communication path from the critical device 10 to a root bridge of the communication network and second port 13b is only sending and receiving network management frames.

The first port 13a remains in its root state 21 when it receives a BPDU indicating lower cost communication path. It just records the last communication costs received over its link. On the other hand, when first port 13a detects a broken communication link or when a time-out elapses indicating a disruption in the communication path, port 13a transits back from the root state 21 to the unknown state 20. This transition has the effect that the other port 13b switches its state from alternate to root and forwards frames, taking over the role of port 13a.

The root state 21 of the port 13a changes to the alternate state 22 when it detects that the second port 13b is switched to the root state. When switching to alternate state 22, the first port 13a sends a BPDU indicating its news state (alternate), repeated every 500 ms during the tcWhile time specified in 802.1D. In the alternate state, first port 13a only listens to network management frames. Also, first port 13a changes to the unknown state 20 when it detects that its communication link is broken. On the other hand, second port 13b changes from the alternate state 22 to the root state 21 if its network controller 12b receives a BPDU indicating a lower cost communication path to the root bridge than the best costs that first port 13a recorded, causing the first port 13a to switch to the alternate state, or when the first port 13a is switched to unknown state. This may occur as a consequence of a failure or addition in the ring.

In accordance with an embodiment of the present invention, the unknown state 20 of the first port 13a can change to the alternate state 22 when the second port 13b of the critical device 10 is switched to the root state or communication is re-established after a disruption while the second port 13b is assigned as root port.

### LIST OF DESIGNATIONS

- 1-5: switch
- 6, 7: switch element
- 8: inter-switch link
- 10, 10': critical devices
- 11: Link Redundancy Entity (LRE)
- 12a, 12b: network controller
- 13a, 13b: port
- 14: first flowchart step
- 15: second flowchart step
- 16: link layer
- 17a, 17b: link layer driver
- 18: upper link layer
- 19: higher layers
- 20: "unknown" state of state machine
- 21: "root" state of state machine
- 22: "alternate" state of state machine

## Claims

1. A process-critical device (10) with a first and a second network controller (12a, 12b) adapted to be connected over a respective first and second port (13a, 13b) to two switches (2, 3) in a communication network of a process control system, the device comprises a Link Redundancy Entity, LRE, (11) adapted to:
implement, by the LRE, a relaying function in the communication network that relays data frames between the first and second port (13a, 13b) only in case the critical device (10) is part of the last working communication connection between the two switches (2, 3), and
implement a subset of the Rapid Spanning Tree Protocol, RSTP, without providing relaying functionality between the first and second port (13a, 13b) in case there is a working communication between the two switches (2, 3).

2. The device according to claim 1, **characterized in that** the RSTP defines a port role of the first port (13a) to "root" and of the second port (13b) to "alternate".

3. The device according to claim 1, **characterized in that** the LRE (11) is part of a link layer (16) of the protocol stack of the critical device (10), hierarchically situated between two link layer drivers (17a, 17b) connected to the network controllers (12a, 12b) and a singular link-to-network layer interface (18) towards higher-level protocol layers (19).

4. The device according to claim 1, **characterized in that** the LRE (11) is adapted to send identical frames to both controllers (12a, 12b) connected to two redundant links of the communication network, and to determine if a frame received is a single frame or a first frame of a pair of two redundant frames transmitted each over one of the two redundant links.

5. The device according to one of claims 1 to 4, **characterized in that** the device (10) is an Intelligent Electronic Device, IED, the two network controllers (12a, 12b) are Ethernet controllers and **in that** the process control system serves the purpose of Substation Automation.

6. A method of operating a process-critical device (10) with increased availability, wherein the device comprises a first and a second network controller (12a, 12b) connected over a respective first and second port (13a, 13b) to two switches (2, 3) of a communication network of a process control system,
the method comprising the steps of:
implementing, by a Link Redundancy Entity, LRE (11), a relaying function in the communication network relaying data frames between its ports only in case the critical device (10) is part of the last working communication connection between the two switches (2, 3), and
implementing, by the Link Redundancy Entity, LRE (11), a subset of the Rapid Spanning Tree Protocol, RSTP, without providing relaying functionality between the first and second port (13a, 13b) in case there is a working communication between the two switches (2, 3).

7. The method according to claim 6, **characterized in that** it comprises: defining, by the RSTP, a port role of the first port (13a) to "root" and of the second port (13b) to "alternate".

8. The method according to claim 6, **characterized in that** it comprises, by the LRE (11), sending identical frames to both controllers (12a, 12b) connected to two redundant links of the communication network, and determining if a frame received is a single frame or a first frame of a pair of two redundant frames transmitted each over one of the two links.

9. The method according to one of claims 6 to 8, wherein the device (10) is an Intelligent Electronic Device, IED, and the two network controllers (12a, 12b) are Ethernet controllers, **characterized in that** it is used in a process control system for the purpose of Substation Automation.

10. A communication network of a process control system, comprising a process-critical device (10) as claimed in one of claims 1 to 5 and operating according to one of claims 6 to 9.

## Patentansprüche

1. Prozesskritische Vorrichtung (10) mit einem ersten und einem zweiten Netz-Controller (12a, 12b), die dafür ausgelegt sind, über einen entsprechenden ersten und zweiten Port (13a, 13b) mit zwei Switches (2, 3) in einem Kommunikationsnetz eines Prozesssteuersystems verbunden zu sein,
wobei die Vorrichtung eine Verbindungsredundanzeinheit, LRE, (11) umfasst, die dafür ausgelegt ist:
durch die LRE eine Weiterleitungsfunktion in dem Kommunikationsnetz zu implementieren, die Datenrahmen zwischen dem ersten und dem zweiten Port (13a, 13b) nur in dem Fall weiterleitet, in dem die kritische Vorrichtung (10) Teil der letzten funktionsfähigen Kommunikationsverbindung zwischen den beiden Switches (2, 3) ist, und
eine Untergruppe des Rapid-Spanning-Tree-Protokolls, RSTP, zu implementieren, ohne Bereitstellung einer Weiterleitungsfunktionalität zwischen dem ersten und dem zweiten Port (13a, 13b), falls es eine funktionsfähige Kommunikation zwischen den beiden Switches (2, 3) gibt.

2. Vorrichtung nach Anspruch 1, **dadurch gekennzeichnet, dass** das RSTP eine Port-Rolle des ersten Ports (13a) als "root" und des zweiten Ports (13b) als "alternate" definiert.

3. Vorrichtung nach Anspruch 1, **dadurch gekennzeichnet, dass** die LRE (11) Teil einer Verbindungsschicht (16) des Protokollstapels der kritischen Vorrichtung (10) ist, die hierarchisch zwischen zwei Verbindungsschichttreibern (17a, 17b), die mit den Netz-Controllern (12a, 12b) verbunden sind, und einer singulären Schnittstelle (18) der Verbindungzu-Netz-Schicht zu den Protokollschichten (19) der höheren Niveaus gelegen ist.

4. Vorrichtung nach Anspruch 1, **dadurch gekennzeichnet, dass** die LRE (11) dafür ausgelegt ist, identische Rahmen an beide Controller (12a, 12b), die mit zwei redundanten Verbindungen des Kommunikationsnetzes verbunden sind, zu senden und zu bestimmen, ob ein empfangener Rahmen ein einzelner Rahmen oder ein erster Rahmen eines Paars von zwei redundanten Rahmen ist, wovon jeder über eine der beiden redundanten Verbindungen übertragen wird.

5. Vorrichtung nach einem der Ansprüche 1 bis 4, **dadurch gekennzeichnet, dass** die Vorrichtung (10) eine intelligente elektronische Vorrichtung, IED, ist, die beiden Netz-Controller (12a, 12b) Ethernet-Controller sind und das Prozesssteuersystem dem Zweck der Unterstationsautomatisierung dient.

6. Verfahren zum Betrieben einer prozesskritischen Vorrichtung (10) mit erhöhter Verfügbarkeit, wobei die Vorrichtung einen ersten und einen zweiten Netz-Controller (12a, 12b) umfasst, die über einen entsprechenden ersten und zweiten Port (13a, 13b) mit zwei Switches (2, 3) eines Kommunikationsnetzes eines Prozesssteuersystems verbunden sind,
wobei das Verfahren die folgenden Schritte umfasst:
Implementieren eine Weiterleitungsfunktion in dem Kommunikationsnetz durch eine Verbindungsredundanzeinheit, LRE, (11), die Datenrahmen zwischen ihren Ports nur in dem Fall weiterleitet, in dem die kritische Vorrichtung (10) Teil der letzten funktionsfähigen Kommunikationsverbindung zwischen den beiden Switches (2, 3) ist, und
Implementieren einer Untergruppe des Rapid-Spanning-Tree-Protokolls, RSTP, durch die Verbindungsredundanzeinheit, LRE (11), ohne Bereitstellung einer Weiterleitungsfunktionalität zwischen dem ersten und dem zweiten Port (13a, 13b), falls es eine funktionsfähige Kommunikation zwischen den beiden Switches (2, 3) gibt.

7. Verfahren nach Anspruch 6, **dadurch gekennzeichnet, dass** es Folgendes umfasst: Definieren einer Port-Rolle des ersten Ports (13a) als "root" und des zweiten Ports (13b) als "alternate".

8. Verfahren nach Anspruch 6, **dadurch gekennzeichnet, dass** es das Senden identischer Rahmen an beide Controller (12a, 12b), die mit zwei redundanten Verbindungen des Kommunikationsnetzes verbunden sind, durch die LRE (11) und das Bestimmen, ob ein empfangener Rahmen ein einzelner Rahmen oder ein erster Rahmen eines Paars von zwei redundanten Rahmen, wovon jeder über eine der beiden Verbindungen übertragen wird, ist, umfasst.

9. Verfahren nach einem der Ansprüche 6 bis 8, wobei die Vorrichtung (10) eine intelligente elektronische Vorrichtung, IED, ist und die beiden Netz-Controller (12a, 12b) Ethernet-Controller sind, **dadurch gekennzeichnet, dass** es in einem Prozesssteuersystem für den Zweck der Unterstationsautomatisierung verwendet wird.

10. Kommunikationsnetz eines Prozesssteuersystems, das eine prozesskritische Vorrichtung (10) nach einem der Ansprüche 1 bis 5 und einen Betrieb gemäß einem der Ansprüche 6 bis 9 umfasst.

## Revendications

1. Dispositif critique pour un processus (10) comprenant des premier et second contrôleurs de réseau (12a, 12b) conçus pour être connectés sur des premier et second ports respectifs (13a, 13b) à deux commutateurs (2, 3) dans un réseau de communication d'un système de contrôle de processus, le dispositif comprenant un une entité de redondance de lien, LRE, (11) conçue pour :
implémenter, par la LRE, une fonction de relais dans le réseau de communication, qui relaie des trames de données entre les premier et second ports (13a, 13b) uniquement dans le cas où le dispositif critique (10) fait partie de la dernière connexion de communication opérationnelle entre les deux commutateurs (2, 3), et
implémenter un sous-ensemble du protocole à algorithme de l'arbre recouvrant rapide, RSTP, sans fournir de fonctionnalité de relais entre les premier et second ports (13a, 13b) dans le cas où il y a une communication opérationnelle entre les deux commutateurs (2, 3).

2. Dispositif selon la revendication 1, **caractérisé en ce que** le RSTP définit un rôle de port du premier port (13a) à « racine » et du second port (13b) à « alternatif ».

3. Dispositif selon la revendication 1, **caractérisé en ce que** la LRE (11) fait partie d'une couche de liaison (16) de la pile de protocoles du dispositif critique (10), située hiérarchiquement entre deux pilotes de couche de liaison (17a, 17b) connectés aux contrôleurs de réseau (12a, 12b) et une interface de couche liaison vers réseau singulière (18) vers des couches de protocoles de plus haut niveau (19).

4. Dispositif selon la revendication 1, **caractérisé en ce que** la LRE (11) est conçue pour envoyer des trames identiques aux deux contrôleurs (12a, 12b) connectés à deux liaisons redondantes du réseau de communication, et pour déterminer si une trame reçue est une trame unique ou une première trame d'une paire de deux trames redondantes transmises chacune sur une des deux liaisons redondantes.

5. Dispositif selon une des revendications 1 à 4, **caractérisé en ce que** le dispositif (10) est un dispositif électronique intelligent, IED, les deux contrôleurs de réseau (12a, 12b) sont des contrôleurs Ethernet, et **en ce que** le système de contrôle de processus sert à l'automatisation des sous-stations.

6. Procédé d'exploitation d'un dispositif critique pour un processus (10) ayant une disponibilité accrue, dans lequel le dispositif comprend des premier et second contrôleurs de réseau (12a, 12b) connectés sur des premier et second ports respectifs (13a, 13b) à deux commutateurs (2, 3) d'un réseau de communication d'un système de contrôle de processus, le procédé comprenant les étapes suivantes :
implémenter, par une entité de redondance de liaison, LRE (11), une fonction de relais dans le réseau de communication, qui relaie des trames de données entre ses ports uniquement, dans le cas où le dispositif critique (10) fait partie de la dernière connexion de communication opérationnelle entre les deux commutateurs (2, 3), et
implémenter, par l'entité de redondance de liaison, LRE (11), un sous-ensemble du protocole à algorithme de l'arbre recouvrant rapide, RSTP, sans fournir de fonctionnalité de relais entre les premier et second ports (13a, 13b) dans le cas où il y a une communication opérationnelle entre les deux commutateurs (2, 3).

7. Procédé selon la revendication 6, **caractérisé en ce qu'**il comprend l'étape suivante : définir, par le RSTP, un rôle de port du premier port (13a) à « racine » et du second port (13b) à « alternatif ».

8. Procédé selon la revendication 6, **caractérisé en ce qu'**il comprend d'envoyer, par la LRE (11), des trames identiques aux deux contrôleurs (12a, 12b) connectés à deux liaisons redondantes du réseau de communication, et de déterminer si une trame reçue est une trame unique ou une première trame d'une paire de deux trames redondantes transmises chacune sur une des deux liaisons.

9. Procédé selon une des revendications 6 à 8, dans lequel le dispositif (10) est un dispositif électronique intelligent, IED, et les deux contrôleurs de réseau (12a, 12b) sont des contrôleurs Ethernet, et **caractérisé en ce qu'**il est utilisé dans un système de contrôle de processus pour l'automatisation des sous-stations.

10. Réseau de communication d'un système de contrôle de processus, comprenant un dispositif critique pour un processus (10) tel que revendiqué dans l'une des revendications 1 à 5, et fonctionnant selon l'une des revendications 6 à 9.
